# EUROPEAN PATENT SPECIFICATION

(11) **EP 4 610 813 B1**
(45) Date of publication and mention of the grant of the patent: **09.12.2026**
(21) Application number: 23887869.8
(22) Date of filing: 31.10.2023
(51) Int. Cl.: G06F 8/65, H04L 67/1095, G06F 8/71

(54) **DATA SYNCHRONIZATION METHOD, STORAGE MEDIUM, AND ELECTRONIC DEVICE**
DATENSYNCHRONISATIONSVERFAHREN, SPEICHERMEDIUM UND ELEKTRONISCHE VORRICHTUNG
PROCÉDÉ DE SYNCHRONISATION DE DONNÉES, SUPPORT D'ENREGISTREMENT ET DISPOSITIF ÉLECTRONIQUE

(30) Priority: 08.11.2022 CN 202211393561
(43) Date of publication of application: 03.09.2025
(73) Proprietor: Huawei Technologies Co., Ltd., Shenzhen, Guangdong 518129 (CN)
(72) Inventor: XU, Bei, Shenzhen, Guangdong 518129 (CN); ZHANG, Tao, Shenzhen, Guangdong 518129 (CN); LI, Peng, Shenzhen, Guangdong 518129 (CN)
(74) Representative: Pfenning, Meinig & Partner mbB
(86) International application number: PCT/CN2023/128527
(87) International publication number: WO 2024/099179

(56) References cited:
- WO-A1-2020/029616
- CN-A- 114 647 452
- CN-A- 114 911 335
- CN-A- 115 242 565
- US-A1- 2017 236 489
- US-A1- 20230 324 974

## Description

### TECHNICAL FIELD

Embodiments of the present invention relate to the field of data synchronization technologies, and in particular, to a data synchronization method, a storage medium, and an electronic device.

### BACKGROUND

A smart watch has two working modes: a smart mode and an ultra-long battery life mode. When the smart watch works in the smart mode, a list of available applications supported by a watch application market is an ecosystem application in the smart mode. The smart watch may implement a plurality of functions through the installed ecosystem application, and has a strong device capability and rich functions, but is very power-consuming. After the smart watch is switched to the ultra-long battery life mode, an ecological capability of the smart watch completely inherits a sport watch, the list of available applications supported by the watch application market is an ecosystem application in the ultra-long battery life mode, and power is saved.

However, when the smart watch is switched from the smart mode to the ultra-long battery life mode, a service of the ecosystem application in the smart mode and a service of a same ecosystem application in the ultra-long battery life mode cannot be switched to a same state.

CN 114647452 describes a method for system switching performed by a wearable device.

### SUMMARY

In view of this, embodiments of the present invention provide a data synchronization method, a storage medium, and an electronic device, to resolve a problem, in a conventional technology, that when a smart watch is switched from a smart mode to an ultra-long battery life mode, a service of an ecosystem application in the smart mode and a service of a same ecosystem application in the ultra-long battery life mode cannot be switched to a same state. The scope of protection of the present invention is set out by the appended claims.

According to a first aspect, an embodiment of the present invention provides a data synchronization method, applied to a first electronic device. The first electronic device includes a first processor and a second processor. When the first electronic device works in a first working mode, the first processor runs a function based on a first application version; or when the first electronic device works in a second working mode, the second processor runs a function based on a second application version. The method includes:

When the first electronic device works in the first working mode, the first processor controls an application of the first application version based on obtained application control information, and synchronizes the application control information to an application of the corresponding second application version; and
the second processor controls the application of the second application version based on the synchronized application control information.

In a possible implementation, the application control information is application data information;
the application of the first application version is a source application (a target application) of the first application version, and the application of the second application version is a target application of the second application version;
a process in which the first processor controls the application of the first application version based on the obtained application control information includes:
   the first processor updates the application data information to a package of the source application (the target application) of the first application version;
   a process in which the first processor synchronizes the application control information to the application of the corresponding second application version includes:
      the first processor transparently transmits the application data information to the second processor based on a package name of the target application through a cross-core communication module;
      that the second processor controls the application of the second application version based on the synchronized application control information includes:
         the second processor synchronously updates the application data information to a package of the target application of the second application version based on a package name of the target application; and
         after that the second processor synchronously updates the application data information to a package of the target application of the second application version based on a package name of the target application, the method further includes:
            the second processor executes a corresponding service based on the synchronously updated application data information in the package of the target application of the second application version.

In a possible implementation, the application data information is device subscription management information;
the source application (the target application) is an application device subscription management service; and
the method further includes:
   when the first electronic device works in the first working mode, the first processor sends, based on the updated device subscription management information in a package of the application device subscription management service of the first application version, device subscription information corresponding to the device subscription management information to a second electronic device connected to the first processor; or
   when the first electronic device works in the second working mode, the second processor sends, based on the updated device subscription management information in a package of the application device subscription management service of the second application version, device subscription information corresponding to the device subscription management information to a second electronic device connected to the second processor.

In a possible implementation, the application data information is in-application data;
the source application (the target application) is a service application; and
the method further includes:
   when the first electronic device works in the first working mode, the first processor executes a corresponding service based on the updated in-application data in a package of the service application of the first application version; or
   when the first electronic device works in the second working mode, the second processor executes a corresponding service based on the updated in-application data in a package of the service application of the second application version.

In a possible implementation, the application control information is application installation state control information;
the application of the first application version is an application market of the first application version, and the application of the second application version is an application market of the second application version;
a process in which the first processor controls the application of the first application version based on the obtained application control information includes:
   the first processor performs corresponding application processing on the application market of the first application version based on the application installation state control information, where the application processing includes at least one of installation, uninstallation, and updating; and
   a process in which the second processor controls the application of the second application version based on the synchronized application control information includes:
      the second processor performs corresponding application processing on the application market of the second application version based on the synchronized application installation state control information.

In a possible implementation, that the first processor transparently transmits the application data information to the second processor based on a package name of the target application through a cross-core communication module includes:

The first processor sends cross-core information and the application data information to the cross-core communication module, where the cross-core information includes the package name of the target application;
the cross-core communication module finds detection information based on the package name of the target application; and
the cross-core communication module transparently transmits the application data information to the second processor based on the detection information and the package name of the target application.

In a possible implementation, after that the second processor controls the application of the second application version based on the synchronized application control information, the method further includes:
The second processor generates a synchronization success message; and
the second processor sends the synchronization success information to the first processor through a cross-core communication module.

According to a second aspect, an embodiment of the present invention provides a first electronic device. The first electronic device includes a first processor, a second processor, and a cross-core communication module; the first processor and the second processor are connected through the cross-core communication module, the first processor includes a part of the cross-core communication module, and the second processor includes a part of the cross-core communication module; and when the first electronic device works in a first working mode, the first processor runs a function based on a first application version; or when the first electronic device works in a second working mode, the second processor runs a function based on a second application version;
when the first electronic device works in the first working mode, the first processor is configured to control an application of the first application version based on obtained application control information, and synchronize the application control information to an application of the corresponding second application version; and
the second processor is configured to control the application of the second application version based on the synchronized application control information. In a possible implementation, the application control information is application data information;
the application of the first application version is a source application (a target application) of the first application version, and the application of the second application version is a target application of the second application version;
the first processor is specifically configured to: update the application data information to a package of the source application (the target application) of the first application version; and transparently transmit the application data information to the second processor based on a package name of the target application through the cross-core communication module; and
the second processor is specifically configured to: synchronously update the application data information to a package of the target application of the second application version based on a package name of the target application; and execute a corresponding service based on the synchronously updated application data information in the package of the target application of the second application version.

According to a third aspect, an embodiment of the present invention provides a storage medium. The storage medium includes a stored program; and when the program is run, a device in which the storage medium is located is controlled to perform the data synchronization method according to any one of the first aspect or the possible implementations of the first aspect.

In technical solutions of a data synchronization method, a storage medium, and an electronic device provided in embodiments of the present invention, the method is applied to a first electronic device. The first electronic device includes a first processor and a second processor. When the first electronic device works in a first working mode, the first processor controls an application of a first application version based on obtained application control information, and synchronizes the application control information to an application of a corresponding second application version. The second processor controls the application of the second application version based on the synchronized application control information, so that when the electronic device works in the first working mode, a process of the application of the second application version in a second working mode is the same as a process of the application of the first application version in the first working mode, and the process of the application of the second application version in the second working mode is the same as the process of the application of the first application version in the first working mode. When the electronic device is switched from the first working mode to the second working mode, a service of the application of the first application version in the first working mode and a service of the application of the second application version in the second working mode can be switched to a same state, and user experience is improved.

### BRIEF DESCRIPTION OF DRAWINGS

To describe technical solutions in embodiments of the present invention more clearly, the following briefly describes the accompanying drawings used in describing embodiments. Apparently, the accompanying drawings in the following descriptions show merely some embodiments of the present invention, and a person of ordinary skill in the art may still derive other drawings from these accompanying drawings without creative efforts.
FIG. 1 is a diagram of a structure of a first electronic device according to an embodiment of the present invention;
FIG. 2 is a flowchart of a data synchronization method according to an embodiment of the present invention;
FIG. 3 is a diagram of one type of synchronization information according to an embodiment of the present invention;
FIG. 4 is a flowchart of another data synchronization method according to an embodiment of the present invention;
FIG. 5 is a diagram of another type of synchronization according to an embodiment of the present invention;
FIG. 6 is a diagram of synchronizing in-application data according to an embodiment of the present invention;
FIG. 7A and FIG. 7B are a diagram of synchronizing device subscription management information according to an embodiment of the present invention; and
FIG. 8 is a diagram of a structure of another first electronic device according to an embodiment of the present invention.

### DESCRIPTION OF EMBODIMENTS

To better understand the technical solutions in the present invention, the following describes embodiments of the present invention in detail with reference to the accompanying drawings.

It should be clear that described embodiments are merely some but not all of embodiments of the present invention. All other embodiments obtained by a person of ordinary skill in the art based on embodiments of the present invention without creative efforts shall fall within the protection scope of the present invention.

The terms used in embodiments of the present invention are merely for the purpose of illustrating specific embodiments, and are not intended to limit the present invention. The terms "a", "the", and "this" of singular forms used in embodiments and the appended claims of the present invention are also intended to include plural forms, unless otherwise specified in the context clearly.

It should be understood that the term "and/or" in this specification describes only an association relationship for describing associated objects and represents that three relationships may exist. For example, A and/or B may represent the following cases: Only A exists, both A and B exist, and only B exists. In addition, the character "/" in this specification usually indicates an "or" relationship between the associated objects.

It should be understood that, although terms such as "first", "second", and "third" may be used in embodiments of the present invention to describe quantities, the quantities should not be limited to these terms. These terms are merely used to distinguish between the quantities from each other. For example, without departing from the scope of embodiments of the present invention, a first quantity may also be referred to as a second quantity, and similarly, a second quantity may also be referred to as a first quantity.

Depending on the context, for example, words "if" used herein may be explained as "while" or "when" or "in response to determining" or "in response to detecting". Similarly, depending on the context, phrases "if determining" or "if detecting (a stated condition or event)" may be explained as "when determining" or "in response to determining" or "when detecting (the stated condition or event)" or "in response to detecting (the stated condition or event)".

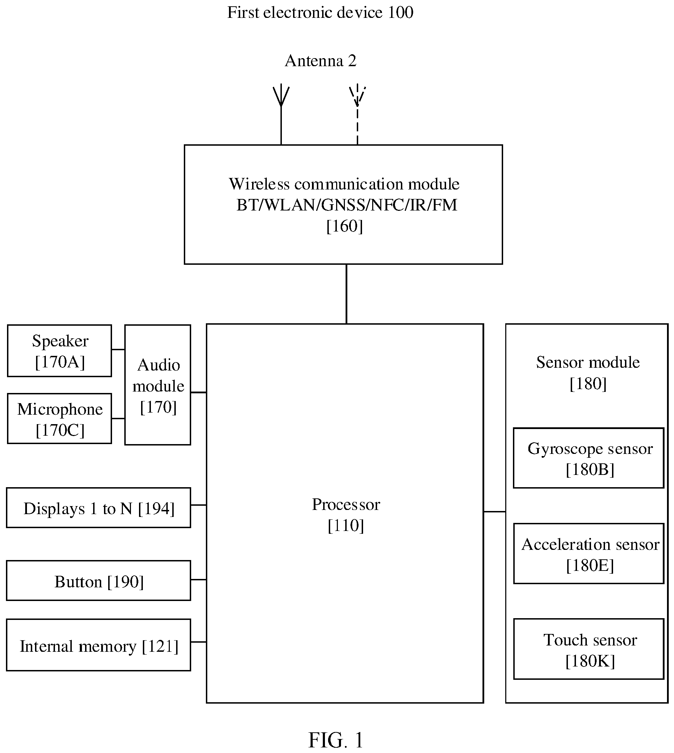

FIG. 1 is a diagram of a structure of a first electronic device according to an embodiment of the present invention. FIG. 1 is a diagram of a structure of a first electronic device 100.

The first electronic device 100 may include a processor 110, an internal memory 121, an antenna 2, a wireless communication module 160, an audio module 170, a speaker 170A, a microphone 170C, a sensor module 180, a button 190, a camera 193, a display 194, and the like. The sensor module 180 may include a gyroscope sensor 180B, an acceleration sensor 180E, a touch sensor 180K, and the like.

It may be understood that the structure shown in embodiments of the present invention does not constitute a specific limitation on the first electronic device 100. In some other embodiments of the present invention, the first electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor, a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetching and instruction execution.

The processor 110 in embodiments of the present invention is a processor 110 that may include two or more processors. For example, the processor 110 includes a first processor and a second processor.

The first processor may include one or more processing units. For example, the first processor may include an application processor, a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The first processor is responsible for running various applications of the first electronic device, including interaction between a UI human-machine interaction interface, a cloud server, and a second electronic device, and the like. Therefore, the first processor is usually with high power consumption and a strong processing capability. The first processor may be a central processing unit (Central Processing Unit, CPU), a digital signal processor (Digital Signal Processor, "DSP" for short), or the like. Embodiments of the present invention are not limited thereto.

The first processor runs in a first working mode, and the second processor may run in a second working mode. The second processor is connected to the first processor. For example, the first processor and the second processor are connected through wired communication (for example, a serial bus, a cross-core communication module, or a parallel bus).

In embodiments of the present invention, after the first processor detects an event that a user selects the second working mode, the first processor with a large workload and large power consumption is disabled, so that the first electronic device 100 runs in the second working mode through the second processor with a small workload and low power consumption.

The second processor may be a processor with low power consumption, for example, a micro control unit (Micro Control Unit, "MCU" for short) or a digital signal processor (Digital Signal Processor, "DSP" for short). Running power consumption of the first processor in the first working mode is greater than running power consumption of the second processor in the second working mode.

A wireless communication function of the first electronic device 100 may be implemented through the antenna 2, the wireless communication module 160, and the like.

The antenna 2 is configured to transmit and receive electromagnetic wave signals. Each antenna in the first electronic device 100 may be configured to cover one or more communication bands. Different antennas may be further multiplexed, to improve antenna utilization.

The wireless communication module 160 may provide a wireless communication solution that is applied to the first electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The first electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) and the like created in a process of using the first electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications of the first electronic device 100 and data processing.

The first electronic device 100 may implement an audio function, for example, music playing and recording, through the audio module 170, the speaker 170A, the microphone 170C, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The first electronic device 100 may be used to listen to music or answer a call in a hands-free mode through the speaker 170A.

The microphone 170C, also referred to as a "mike" or a "mic", is configured to convert a sound signal into an electrical signal. When making a call or sending voice information, the user may make a sound near the microphone 170C through a mouth of the user, and input a sound signal to the microphone 170C. At least one microphone 170C may be disposed in the first electronic device 100. In some other embodiments, two microphones 170C may be disposed in the first electronic device 100, to collect a sound signal and implement a noise reduction function. In some other embodiments, three, four, or more microphones 170C may alternatively be disposed in the first electronic device 100, to collect a sound signal, implement noise reduction, and identify a sound source, to implement a directional recording function and the like.

The gyroscope sensor 180B may be configured to determine a motion posture of the first electronic device 100. In some embodiments, an angular velocity of the first electronic device 100 around three axes (namely, axes x, y, and z) may be determined through the gyroscope sensor 180B. The gyroscope sensor 180B may also be used in a navigation scenario and a somatic game scenario.

The acceleration sensor 180E may detect accelerations in various directions (usually on three axes) of the first electronic device 100. When the first electronic device 100 is still, the acceleration sensor 180E may detect a magnitude and a direction of gravity. The acceleration sensor 180E may be further configured to identify a posture of the first electronic device, and is used in an application such as switching between a landscape mode and a portrait mode or a pedometer.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may also be disposed on a surface of the first electronic device 100 at a location different from that of the display 194.

The button 190 includes a power button, a volume button, and the like. The button 190 may be a mechanical button, or may be a touch button. The first electronic device 100 may receive a button input, and generate a button signal input related to a user setting and function control of the first electronic device 100.

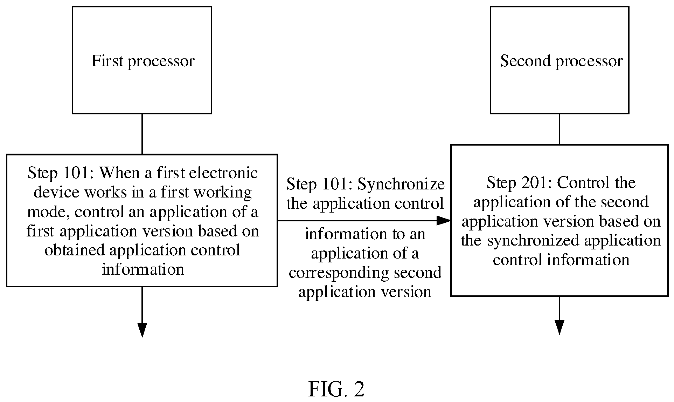

Embodiments of the present invention provide a data synchronization method applied to a first electronic device. The first electronic device includes but is not limited to a mobile phone, a tablet computer, a portable PC, a desktop computer, a wearable device, and the like, and the wearable device includes a smart watch. The first electronic device includes a first processor and a second processor. When the first electronic device works in a first working mode, the first processor runs a function based on a first application version; or when the first electronic device works in a second working mode, the second processor runs a function based on a second application version. FIG. 2 is a flowchart of a data synchronization method according to an embodiment of the present invention. As shown in FIG. 2, the method includes the following steps.

Step 101: When a first electronic device works in a first working mode, a first processor controls an application of a first application version based on obtained application control information, and synchronizes the application control information to an application of a corresponding second application version.

In this embodiment of the present invention, when the first electronic device works in the first working mode, the first processor shown in FIG. 1 is powered on, and the first processor runs in the first working mode.

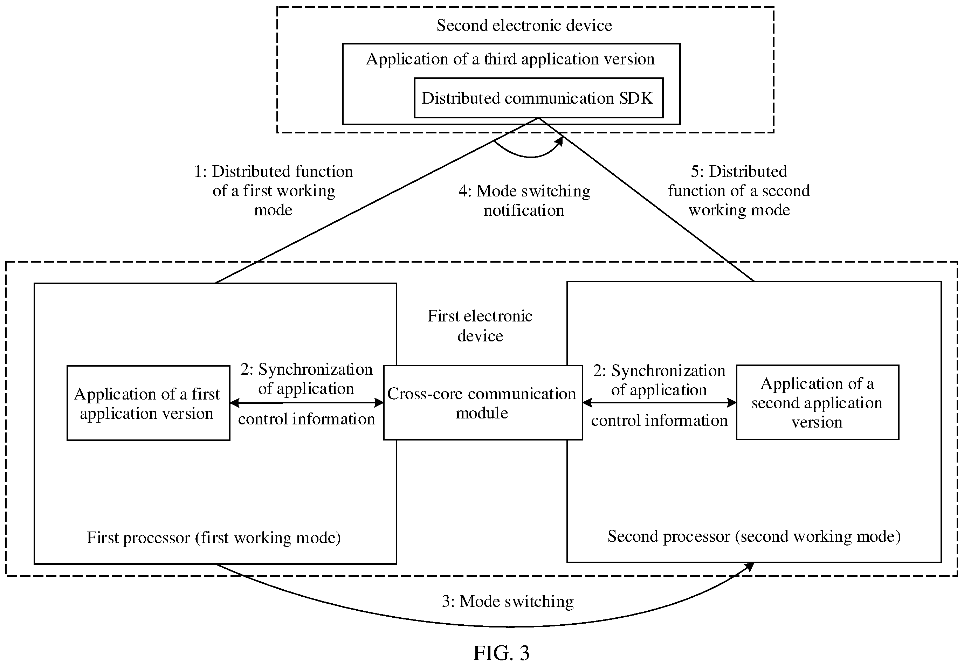

FIG. 3 is a diagram of one type of synchronization information according to an embodiment of the present invention. As shown in FIG. 3, a first electronic device is communicatively connected to a second electronic device. The first electronic device includes a first processor, a cross-core communication module, and a second processor. The first processor includes a part of the cross-core communication module, and the second processor also includes a part of the cross-core communication module, so that the first processor is communicatively connected to the second processor through the cross-core communication module. When the first electronic device works in a first working mode, the first processor is communicatively connected to the second electronic device. The second electronic device supports a distributed function of the first working mode for the first electronic device. The first processor runs an application of a first application version, and the application of the first application version is an application running in the first working mode. For example, the first processor runs an ecosystem application (the first application version). The first processor synchronizes application control information to the second processor through the cross-core communication module. When a working mode of the first electronic device is switched from the first working mode to a second working mode, the first processor is powered off and the second processor is powered on, the communication connection between the first processor and the second electronic device is disconnected, and the second processor is communicatively connected to the second electronic device. The second electronic device includes an application of a third application version, the application of the third application version includes a distributed communication software development kit (Software Development Kit, SDK), and the distributed communication SDK is middleware. An SDK apparatus corresponding to the SDK of the second electronic device may be configured to receive a mode switching notification sent by the first electronic device, and may also be configured to support a distributed function of the second working mode for the first electronic device. The second processor runs an application of a second application version, the application of the second application version is an application running in the second working mode, and a name of the application of the second application version is usually the same as a name of the application of the first application version. For example, the second processor runs an ecosystem application (the second application version). The second processor synchronizes the application control information to the first processor through the cross-core communication module.

For example, the first electronic device is a smart watch, and the second electronic device is a mobile phone. When the first processor is a wireless access point (Wireless Access Point, AP) processor, the second processor is an MCU processor, the first working mode is a smart mode, and the second working mode is an ultra-long battery life mode. Alternatively, when the first processor is an MCU processor, the second processor is an AP processor, the first working mode is an ultra-long battery life mode, and the second working mode is a smart mode.

When the first electronic device works in the first working mode, the first processor obtains the application control information, and the application control information may be information received from the second electronic device, or may be information generated in response to an operation of a user.

As shown in FIG. 3, the first processor synchronizes the obtained application control information to the second processor in real time through the cross-core communication module.

Step 201: The second processor controls the application of the second application version based on the synchronized application control information.

In this embodiment of the present invention, the second processor receives, through the cross-core communication module, the application control information sent by the first processor, and controls the application of the second application version based on the application control information.

For example, as shown in FIG. 3, the second processor controls the application of the second application version based on the application control information, so that a real-time and automatic synchronization process between the first processor and the second processor is implemented, thereby achieving effect of synchronizing a process of the application of the second application version with a process of the application of the first application version. When the electronic device is switched from the first working mode to the second working mode, a service of the application of the first application version in the first working mode and a service of the application of the second application version in the second working mode can be switched to a same state.

An embodiment of the present invention provides a data synchronization method, applied to a first electronic device. The first electronic device includes a first processor and a second processor. When the first electronic device works in a first working mode, the first processor controls an application of a first application version based on obtained application control information, and synchronizes the application control information to an application of a corresponding second application version. The second processor controls the application of the second application version based on the synchronized application control information, so that when the electronic device works in the first working mode, a process of the application of the second application version in a second working mode is the same as a process of the application of the first application version in the first working mode. When the electronic device is switched from the first working mode to the second working mode, a service of the application of the first application version in the first working mode and a service of the application of the second application version in the second working mode can be switched to a same state, and user experience is improved.

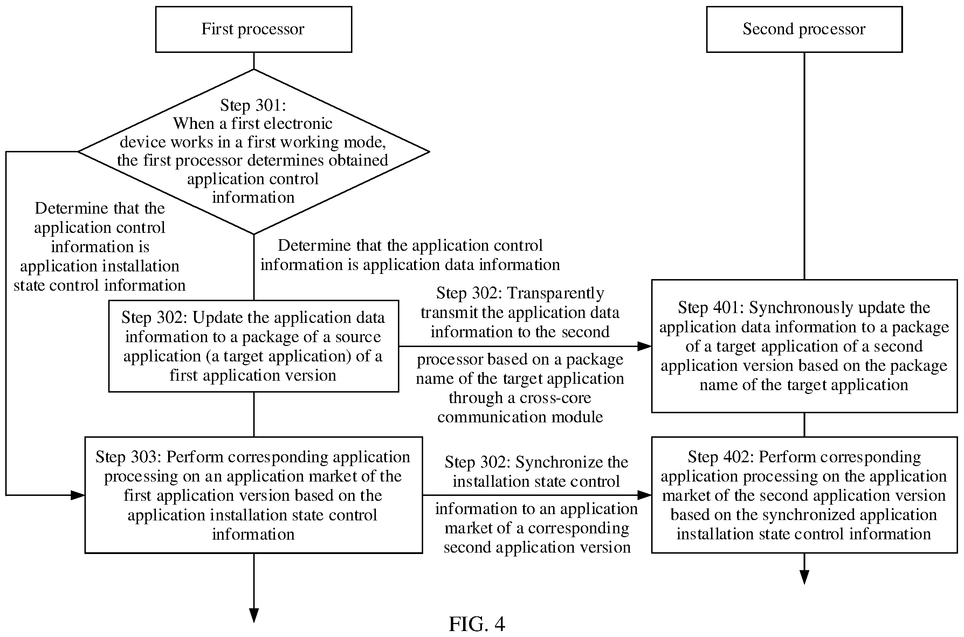

FIG. 4 is a flowchart of another data synchronization method according to an embodiment of the present invention. As shown in FIG. 4, the method includes the following steps: Step 301: When a first electronic device works in a first working mode, a first processor determines obtained application control information; and if the first processor determines that the application control information is application data information, step 302 is performed; or if the first processor determines that the application control information is application installation state control information, step 303 is performed.

The application control information includes the application data information or the application installation state control information, and the application data information includes device subscription management information or in-application data.

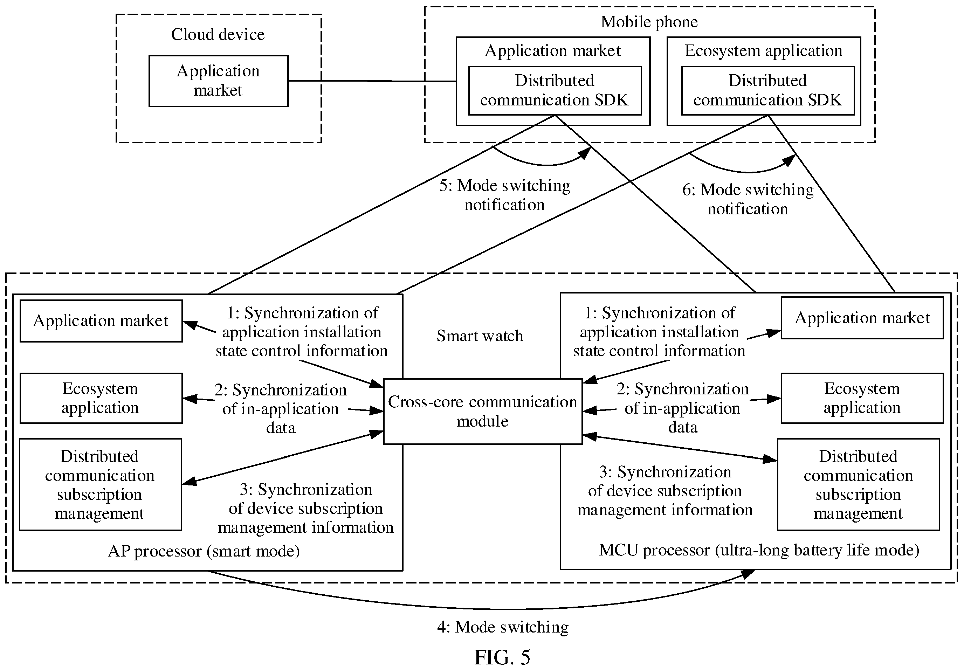

FIG. 5 is a diagram of another type of synchronization according to an embodiment of the present invention. As shown in FIG. 5, a first electronic device is a smart watch, a second electronic device is a mobile phone, the smart watch is communicatively connected to the mobile phone, and the mobile phone may be further communicatively connected to a cloud device. A first processor is an AP processor, a second processor is an MCU processor, a first working mode is a smart mode, and a second working mode is an ultra-long battery life mode. Mode switching may be performed on the working mode of the smart watch, and the mode of the smart watch is switched from the smart mode to the ultra-long battery life mode. When the mode of the smart watch is switched, the smart watch sends a mode switching notification to the mobile phone. A distributed communication software development kit of an application market of the mobile phone switches, based on mode switching information sent by the smart watch, a distributed function supported by the application market of the mobile phone end from a distributed function supporting the smart mode to a distributed function supporting the ultra-long battery life mode. A distributed communication SDK apparatus of an ecosystem application of the mobile phone switches, based on the mode switching information sent by the smart watch, a distributed function supported by the ecosystem application of the mobile phone end from the distributed function supporting the smart mode to the distributed function supporting the ultra-long battery life mode.

When the smart watch works in the smart mode, the AP processor runs at least one of an application market, an ecosystem application, and distributed communication subscription management in the smart mode. The AP processor receives application control information sent by the mobile phone, where the application control information may be application installation state control information, device subscription management information, or in-application data; and the AP processor synchronizes "application installation state control information", "in-application data", or "device subscription management information" to the MCU processor. When the first electronic device works in the ultra-long battery life mode, the MCU processor runs at least one of an application market, an ecosystem application, and distributed communication subscription management in the ultra-long battery life mode. The MCU processor receives application control information sent by the mobile phone, where the application control information may be application installation state control information, device subscription management information, or in-application data; and the MCU processor synchronizes "application installation state control information", "in-application data", or "device subscription management information" to the AP processor. However, steps "1", "2", and "3" shown in FIG. 5 are merely numerical numbers, and do not indicate that the AP processor sequentially synchronizes the installation state control information, the in-application data, and the device subscription management information to the MCU processor in a numerical sequence, or do not indicate that the MCU processor sequentially synchronizes the installation state control information, the in-application data, and the device subscription management information to the AP processor in a numerical sequence.

As shown in FIG. 5, the application control information includes the application installation state control information, the device subscription management information, or the in-application data.

Step 302: The first processor updates the application data information to a package of a source application (a target application) of a first application version, and transparently transmits the application data information to the second processor based on a package name of the target application through a cross-core communication module.

In this embodiment of the present invention, an application of the first application version is the source application (the target application) of the first application version, and an application of a second application version is a target application of the second application version. The source application (the target application) of the first application version and the target application of the second application version are a same application in different working modes.

That the first processor transparently transmits the application data information to the second processor based on a package name of the target application through a cross-core communication module includes: The first processor sends cross-core information and the application data information to the cross-core communication module, where the cross-core information includes the package name of the target application; the cross-core communication module finds detection information based on the package name of the target application; and the cross-core communication module transparently transmits the application data information to the second processor based on the detection information and the package name of the target application.

The cross-core communication module stores the detection information, and the detection information includes a source package name, signature information, and a trustlist. The cross-core communication module finds the source package name, the signature information, and the trustlist by using the package name of the target application; and determines, based on the source package name, the signature information, and the trustlist, whether to send the application data information to the second processor based on the package name of the target application.

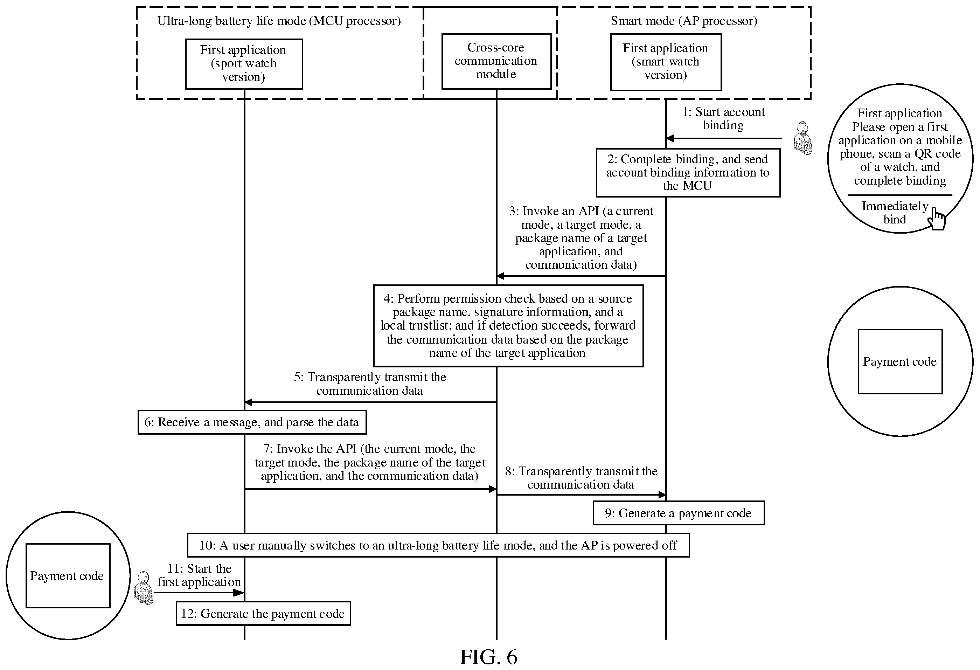

The application data information includes the in-application data, and the in-application data includes account binding information. FIG. 6 is a diagram of synchronizing in-application data according to an embodiment of the present invention. As shown in FIG. 6, a smart watch, an AP processor, a cross-core communication module, and an MCU processor shown in FIG. 6 may be the same as the smart watch, the AP processor, the cross-core communication module, and the MCU processor shown in FIG. 5. A first application (a smart watch version) and a first application (a sport watch version) shown in FIG. 6 are respectively the ecosystem application in the AP processor and the ecosystem application in the MCU processor shown in FIG. 5. The ultra-long battery life mode may also be referred to as a sport mode. When the smart watch works in the ultra-long battery life mode, the smart watch may also be referred to as a sport watch. An account of the first application (the smart watch version) is not bound to an account of the first application (the sport watch version). When the smart watch works in the smart mode, the AP processor is connected to the mobile phone. When the user performs an operation of binding the account of the first application (the smart watch version), the smart watch displays "please open a first application on the mobile phone, scan a QR code of a watch, and complete binding", the user may open the first application (a mobile phone version) of the mobile phone and tap a "scan a QR code" button, and the mobile phone scans the QR code displayed on the smart watch and sends account binding information to the AP processor. The AP processor receives the account binding information sent by the mobile phone, and binds the account of the first application (the smart watch version); and after the binding is completed, sends the account binding information to the MCU processor through the cross-core communication module, that is, "communication data" in step 3, step 4, and step 5 is the account binding information. After receiving the account binding information, the MCU parses the account binding information, and sends a synchronization success message to the AP processor after binding the account of the first application (the sport watch version), that is, "communication data" in step 7 and step 8 is the synchronization success information. After the AP processor completes binding of the account of the first application (the smart watch version), the AP processor performs step 9. The AP processor generates a QR code, and sends the generated QR code to a display of the smart watch. For example, as shown in FIG. 1, the first electronic device includes the display, and the display displays a payment code. When the smart watch works in the ultra-long battery life mode, the user can enable the electronic watch to display the payment code by starting the first application (the sport watch version), so that when the working mode of the first electronic device is switched from the smart mode to the ultra-long battery life mode, a service of the first application (the sport watch version) and a service of the first application (the smart watch version) are in a same state, and the user does not need to bind the account of the first application (the sport watch version) again.

As shown in FIG. 6, when the AP processor sends the account binding information to the MCU processor, the AP processor invokes an application programming interface (Application Programming Interface, API). When invoking the API, the AP processor needs cross-core information. The cross-core information includes a current mode, a target mode, the package name of the target application, and the communication data. In this case, the current mode is the smart mode, the target mode is the ultra-long battery life mode, the package name of the target application is a name of the first application, and the communication data is the account binding information. The cross-core communication module finds, from at least one source package name based on the package name of the target application, a source package name that is the same as the package name of the target application, and finds signature information corresponding to the source package name. The signature information is usually used to ensure integrity of information transmission and ensure that content in the package is not replaced. The cross-core communication module determines, based on the source package name and the signature information, whether the target application can send the account binding information to the MCU processor; if determining that the target application can send the account binding information to the MCU processor, determines whether a local trustlist includes the package name of the target application; and if determining that the local trustlist includes the package name of the target application, sends the account binding information to the MCU processor based on the package name of the target application. Before the cross-core communication module sends the account binding information to the MCU processor, the MCU processor is in a power-off state, and the cross-core communication module wakes up the MCU processor to power on the MCU processor.

Step 401: The second processor synchronously updates the application data information to the package of the target application of the second application version based on the package name of the target application.

In this embodiment of the present invention, in a possible implementation, if the application data information is device subscription management information; and after the second processor synchronously updates the device subscription management information to the package of the target application of the second application version, the method further includes: The second processor generates a synchronization success message; and sends the synchronization success information to the first processor through the cross-core communication module.

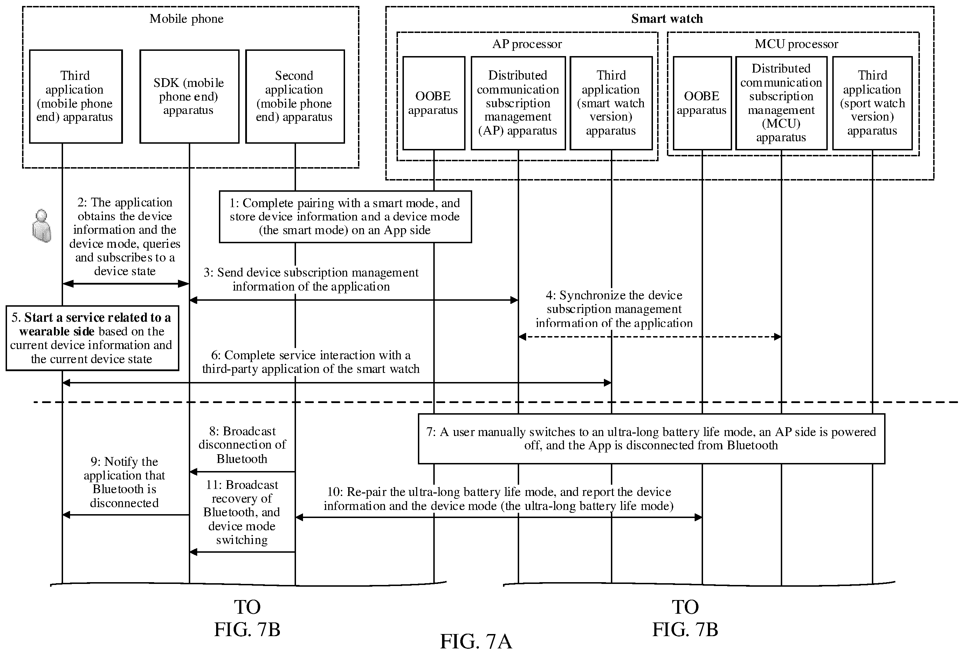

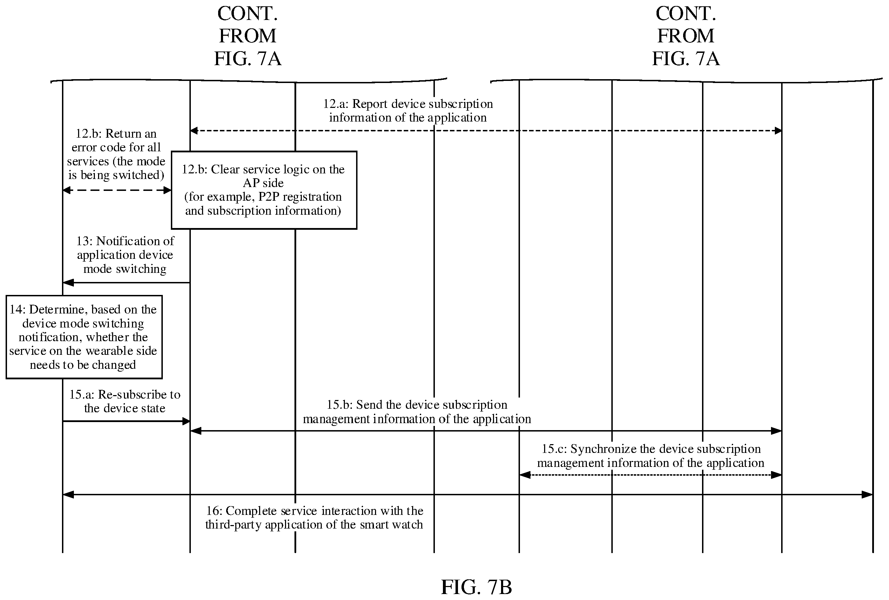

FIG. 7A and FIG. 7B are a diagram of synchronizing device subscription management information according to an embodiment of the present invention. As shown in FIG. 7A and FIG. 7B, a smart watch shown in FIG. 7A and FIG. 7B may be the same as the smart watch shown in FIG. 5 or FIG. 6, a mobile phone shown in FIG. 7A and FIG. 7B may be the mobile phone shown in FIG. 5, and a second application and a third application shown in FIG. 7A and FIG. 7B are both the ecosystem applications shown in FIG. 5. An SDK (a mobile phone end) indicates a software development kit responsible for interacting with a wearable device. Distributed communication subscription management (AP) indicates the distributed communication subscription management of the AP processor. Distributed communication subscription management (MCU) indicates the distributed communication subscription management of the MCU processor. When the smart watch is connected to the mobile phone, an out-of-box experience (Out-of-box experience, OOBE) apparatus is configured to perform a step of the communication connection between the mobile phone and the smart watch. Steps 1 to 3, step 5, and step 6 above the dashed line indicate a process of interaction between the AP processor and the mobile phone. Step 4 indicates that the AP processor synchronizes the device subscription management information to the MCU processor, where step 4 being a dashed line indicates that when the AP processor synchronizes the device subscription management information to the MCU processor, synchronization may succeed or fail. Step 7 to step 16 below the dashed line indicate a process of interaction between the MCU processor and the mobile phone. If the synchronization in step 4 succeeds, the MCU processor performs steps 7, 10, 12.a, and 16; and the mobile phone performs steps 8, 9, 11, 13, 14, and 16, and does not perform steps 12.b, 15.a, and 15.b. If the synchronization in step 4 fails, the MCU processor performs steps 7, 10, 15.b, 15.c, and 16; and the mobile phone performs steps 8, 9, 11, 12.b, 13, 14, 15.a, 15.b, and 16.

As shown in FIG. 7A and FIG. 7B, the mobile phone in step 1 completes pairing with the smart mode, that is, the AP processor completes the step of the communication connection to the mobile phone by sending device information and a device mode to the mobile phone. The device information may include information such as device power and a connected state. In this case, the device mode is the smart mode, and the connected state is a state of being connected to the AP processor. A second application (mobile phone end) apparatus stores the device information and the device mode. In step 2, a third application (mobile phone end) apparatus may obtain the device information and the device mode; and parse a plurality of device states based on the device information and the device mode, where the plurality of device states include the device mode, the device power, the connected state, and the like. When the user opens the third application (the mobile phone end), the user can query the device state, and the mobile phone displays the plurality of device states. The user may subscribe to any quantity of device states by using the plurality of device states displayed on the mobile phone. For example, the user subscribes to two device states, and the two device states include the device power and the connected state. In step 3, the third application (mobile phone end) apparatus sends, to the SDK (mobile phone end) apparatus, the device state subscribed to by the user; and the SDK (mobile phone end) apparatus generates the device subscription management information based on at least one device state subscribed to by the user, and sends the device subscription management information to the AP processor. A distributed communication subscription management (AP) apparatus collects, based on the device subscription management information, current power of the device and generates a current connected state; and generates device subscription information based on the current power and the current connected state, and sends the device subscription information to the SDK (mobile phone end) apparatus. In step 4, the distributed communication subscription management (AP) apparatus synchronizes the device subscription management information to a distributed communication subscription management (MCU) apparatus. After successfully synchronizing the device subscription management information, the distributed communication subscription management (MCU) apparatus sends a synchronization success message to the distributed communication subscription management (AP) apparatus. Because the first electronic device works in the first working mode, after the synchronization success message is sent to the distributed communication subscription management (AP) apparatus, the MCU processor continues to be in the power-off state. In step 5 and step 6, the current device information includes that the third application (the mobile phone end) may perform service interaction with the smart watch based on the device information and the subscribed device state.

Therefore, after the working mode of the first electronic device is switched, the user does not need to subscribe to the device state of the first electronic device again through the second electronic device, the second electronic device does not need to send the device subscription management information to the first electronic device again, and the first electronic device can actively send the device subscription information to the second electronic device, so that a subscription process of the application of the second application version in the second working mode is the same as a subscription process of the application of the first application version in the first working mode. When the electronic device is switched from the first working mode to the second working mode, a service of the application of the first application version in the first working mode and a service of the application of the second application version in the second working mode can be switched to a same state, and user experience is improved.

In another possible implementation, when the application data information is in-application data, after step 401, the method further includes: The second processor executes a corresponding service based on the synchronously updated application data information in the package of the target application of the second application version.

For example, the in-application data includes account binding information, and the second processor binds an account of the target application of the second application version based on the account binding information. As shown in FIG. 6, in step 6, the MCU processor receives the account binding information; synchronously updates the account binding information to the package of the first application (the sport watch version); and parses the account binding information to bind the first application (the sport watch version) and the account of the first application (the sport watch version).

After the second processor successfully executes the corresponding service, the method further includes: The second processor generates a synchronization success message; and sends the synchronization success information to the first processor through the cross-core communication module.

In a possible implementation, after step 401, the method further includes: The application data information is device subscription management information; the source application (the target application) is an application device subscription management service; and when the first electronic device works in the first working mode, the first processor sends, based on the updated device subscription management information in a package of the application device subscription management service of the first application version, device subscription information corresponding to the device subscription management information to the second electronic device connected to the first processor; or when the first electronic device works in the second working mode, the second processor sends, based on the updated device subscription management information in a package of the application device subscription management service of the second application version, device subscription information corresponding to the device subscription management information to the second electronic device connected to the second processor.

As shown in FIG. 7A and FIG. 7B, in step 7, the smart watch switches the working mode from the smart mode to the ultra-long battery life mode in response to a mode switching operation input by the user. In a mode switching process, the AP processor is powered off and the communication connection to the mobile phone is disconnected; and the MCU processor is powered on and sends the device information and the device mode to the mobile phone, so that the communication connection is re-established between the smart watch and the mobile phone. Because the AP processor is communicatively connected to the mobile phone through Bluetooth, in steps 8 and 9, after detecting that the connection to the AP processor is disconnected, the second application (mobile phone end) apparatus broadcasts a Bluetooth disconnection message to the SDK (mobile phone end) apparatus; and the SDK (mobile phone end) apparatus notifies the third application (mobile phone end) apparatus of the Bluetooth disconnection message. In steps 10 and 11, the MCU processor establishes the communication connection to the mobile phone; and the second application (mobile phone end) apparatus detects that the MCU processor establishes the communication connection to the mobile phone, and broadcasts a Bluetooth reply message to the SDK (mobile phone end) apparatus.

If the synchronization in step 4 succeeds, in steps 12.a, 13, 14, and 16, the MCU processor reports the device subscription information to the SDK (mobile phone end) apparatus. The SDK (mobile phone end) apparatus notifies the third application (mobile phone end) apparatus of application device mode switching. The third application (mobile phone end) apparatus determines, based on the device mode switching notification, whether a service on a wearable side needs to be changed; and if the service does not need to be changed, continues to complete service interaction with the MCU processor. If the synchronization in step 4 fails, the mobile phone determines that the smart watch does not report the device subscription information within preset time. In step 12.b, the SDK (mobile phone end) apparatus and the second application (mobile phone end) apparatus clear service logic of the AP processor, where the cleared service logic includes registration information of the AP processor and subscription information reported by the AP processor. The SDK (mobile phone end) apparatus further returns an error code to the third application (mobile phone end) apparatus. For example, the SDK (mobile phone end) apparatus returns, to the third application (mobile phone end) apparatus, information indicating that the mode of the smart watch is still being switched. In step 7, after the service logic of the AP processor is cleared, the SDK (mobile phone end) apparatus performs step 13, and the third application (mobile phone end) apparatus performs step 14. In step 15.a, the third application (mobile phone end) apparatus determines that the service on the wearable side needs to be changed, and resends, to the SDK (mobile phone end) apparatus, at least one device state subscribed to by the user. For step 15.b and step 15.c, refer to step 3 and step 4 in this figure respectively.

Therefore, when the first electronic device works in the first working mode or the second working mode, the second electronic device can support a distributed function; and when the working mode of the first electronic device is switched from the first working mode to the second working mode, the second processor may automatically report the device subscription information to the second processor, and the second electronic device does not need to generate the device subscription management information again. In the step of sending the device subscription management information to the first electronic device, the second electronic device may provide the distributed function for the second processor based on the device subscription management information reported by the second processor. This improves user experience.

In another possible implementation, after step 401, the method further includes: When the application data information is in-application data, the application data information is the in-application data; and the source application (the target application) is a service application. The method further includes: When the first electronic device works in the first working mode, the first processor executes a corresponding service based on the updated in-application data in a package of the service application of the first application version; or when the first electronic device works in the second working mode, the second processor executes a corresponding service based on the updated in-application data in a package of the service application of the second application version.

As shown in FIG. 6, that the first processor executes a corresponding service based on the updated in-application data in a package of the service application of the first application version includes: In step 9, the AP processor updates the account binding information based on the package of the first application, and generates a payment code. After generating the payment code, the AP processor may send the payment code to a display of the smart watch, and the display displays the payment code. In step 10, the MCU processor is powered on and the AP processor is powered off, and the working mode of the smart watch is switched from the smart mode to the ultra-long battery life mode. In step 11, the user starts the first application. That the second processor executes a corresponding service based on the updated in-application data in a package of the service application of the second application version includes: In step 12, the MCU processor generates the payment code in response to the operation of starting the first application by the user. After generating the payment code, the MCU processor may send the payment code to a display of the smart watch, and the display displays the payment code.

Therefore, after the user updates the in-application data of the source application (the target application) through the first processor, the second processor may automatically update data in the target application. When the working mode of the first electronic device is switched from the first working mode to the second working mode, the user does not need to perform a same operation on the in-application data of the target application through the second processor again, so that a process of the application of the second application version in the second working mode is the same as a process of the application of the first application version in the first working mode. When the electronic device is switched from the first working mode to the second working mode, a service of the application of the first application version in the first working mode and a service of the application of the second application version in the second working mode can be switched to a same state. This improves user experience.

Step 303: The first processor performs corresponding application processing on an application market of the first application version based on the application installation state control information, and synchronizes the installation state control information to an application market of the corresponding second application version, where the application processing includes at least one of installation, uninstallation, and updating; and the application of the first application version is the application market of the first application version, and the application of the second application version is the application market of the second application version.

In this embodiment of the present invention, the first electronic device works in the first working mode, and the application market includes a plurality of applications and application states corresponding to the applications. The application state includes at least one of installation, uninstallation, and updating. For example, the application state is a state indicating being installed and updated to a latest version. The first processor synchronizes the application installation state control information to the application market of the corresponding second application version through the cross-core communication module.

As shown in FIG. 5, an application market apparatus in the AP processor synchronizes the application installation state control information to an application market apparatus of the MCU processor through the cross-core communication module. For example, the application installation state control information includes information about installing the first application. The user taps a button for installing the first application (the smart watch version) in the application market of the mobile phone. The mobile phone sends the information about installing the first application to the AP processor in response to the operation of tapping the button for installing the first application (the smart watch version) by the user. The AP processor obtains an installation package of the first application (the smart watch version) based on the information about installing the first application and installs the installation package. The application state of the first application in the application market (the smart watch version) is determined as installed. After the installation is completed, the AP processor invokes the API, to obtain interface information, where the interface information includes the information about installing the first application, a current mode, and a target mode; and sends the interface information to the cross-core communication module. The cross-core communication module sends the information about installing the first application to the MCU processor based on the interface information.

Step 402: The second processor performs corresponding application processing on the application market of the second application version based on the synchronized application installation state control information.

In this embodiment of the present invention, as shown in FIG. 5, the application market apparatus of the MCU processor receives the application installation state control information. For example, the application installation state control information includes the information about installing the first application, and the MCU processor obtains an installation package of the first application (the sport watch version) based on the information about installing the first application and installs the installation package. The application state of the first application in the application market (the sport watch version) is determined as installed. Therefore, after performing an installation, uninstallation, or update operation on software in the first processor, the user does not need to perform an installation, uninstallation, or update operation on same software in the second processor again, so that when the electronic device is switched from the first working mode to the second working mode, smooth application switching can be achieved, thereby reducing operations of the user, and saving time of the user.

In a possible implementation, after step 402, the method further includes: The second processor sends the synchronization success information to the first processor through the cross-core communication module.

An embodiment of the present invention provides a data synchronization method, applied to a first electronic device. The first electronic device includes a first processor and a second processor. When the first electronic device works in a first working mode, the first processor controls an application of a first application version based on obtained application control information, and synchronizes the application control information to an application of a corresponding second application version. The second processor controls the application of the second application version based on the synchronized application control information, so that when the electronic device works in the first working mode, a process of the application of the second application version in a second working mode is the same as a process of the application of the first application version in the first working mode. When the electronic device is switched from the first working mode to the second working mode, a service of the application of the first application version in the first working mode and a service of the application of the second application version in the second working mode can be switched to a same state, and user experience is improved.

An embodiment of the present invention provides a storage medium. The storage medium includes a stored program; and when the program is run, a device in which the storage medium is located is controlled to perform the steps of the foregoing data synchronization method embodiment. For specific descriptions, refer to the foregoing data synchronization method embodiment.

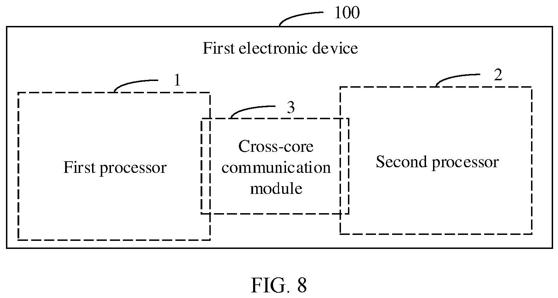

FIG. 8 is a diagram of a structure of another first electronic device according to an embodiment of the present invention. Specifically, FIG. 8 is a diagram of a structure of the processor 110 shown in FIG. 1. As shown in FIG. 8, the first electronic device 100 includes a first processor 1, a second processor 2, and a cross-core communication module 3. The first processor 1 and the second processor 2 are connected through the cross-core communication module 3, the first processor 1 includes a part of the cross-core communication module 3, and the second processor 2 includes a part of the cross-core communication module 3. When the first electronic device 100 works in a first working mode, the first processor 1 runs a function based on a first application version; or when the first electronic device 100 works in a second working mode, the second processor 2 runs a function based on a second application version.

When the first electronic device 100 works in the first working mode, the first processor 1 is configured to control an application of the first application version based on obtained application control information, and synchronize the application control information to an application of the corresponding second application version; and the second processor 2 is configured to control the application of the second application version based on the synchronized application control information.

In this embodiment of the present invention, the application control information is application data information; the application of the first application version is a source application (a target application) of the first application version, and the application of the second application version is a target application of the second application version; the first processor 1 is specifically configured to: update the application data information to a package of the source application (the target application) of the first application version; and transparently transmit the application data information to the second processor 2 based on a package name of the target application through the cross-core communication module 3; and the second processor 2 is specifically configured to: synchronously update the application data information to a package of the target application of the second application version based on a package name of the target application; and execute a corresponding service based on the synchronously updated application data information in the package of the target application of the second application version.

In this embodiment of the present invention, the application data information is device subscription management information; the source application (the target application) is an application device subscription management service; and when the first electronic device 100 works in the first working mode, the first processor 1 is further configured to send, based on the updated device subscription management information in a package of the application device subscription management service of the first application version, device subscription information corresponding to the device subscription management information to the second electronic device connected to the first processor 1; or when the first electronic device 100 works in the second working mode, the second processor 2 is further configured to send, based on the updated device subscription management information in a package of the application device subscription management service of the second application version, device subscription information corresponding to the device subscription management information to the second electronic device connected to the second processor 2.

In this embodiment of the present invention, the application data information is in-application data; the source application (the target application) is a service application; and when the first electronic device 100 works in the first working mode, the first processor 1 is further configured to execute a corresponding service based on the updated in-application data in a package of the service application of the first application version; or when the first electronic device 100 works in the second working mode, the second processor 2 is further configured to execute a corresponding service based on the updated in-application data in a package of the service application of the second application version.

In this embodiment of the present invention, the application control information is application installation state control information; the application of the first application version is an application market of the first application version, and the application of the second application version is an application market of the second application version; the first processor 1 is specifically configured to perform corresponding application processing on the application market of the first application version based on the application installation state control information, where the application processing includes at least one of installation, uninstallation, and updating; and the second processor 2 is specifically configured to perform corresponding application processing on the application market of the second application version based on the synchronized application installation state control information.

In this embodiment of the present invention, the first processor 1 is specifically configured to send cross-core information and the application data information to the cross-core communication module 3, where the cross-core information includes the package name of the target application; the cross-core communication module 3 is configured to find detection information based on the package name of the target application; and the cross-core communication module 3 is further configured to transparently transmit the application data information to the second processor 2 based on the detection information and the package name of the target application.

In this embodiment of the present invention, the second processor 2 is further configured to generate a synchronization success message; and the second processor 2 is further configured to send the synchronization success information to the first processor 1 through the cross-core communication module 3.

An embodiment of the present invention provides a first electronic device. The first electronic device includes a first processor and a second processor. When the first electronic device works in a first working mode, the first processor controls an application of a first application version based on obtained application control information, and synchronizes the application control information to an application of a corresponding second application version. The second processor controls the application of the second application version based on the synchronized application control information, so that when the electronic device works in the first working mode, a process of the application of the second application version in a second working mode is the same as a process of the application of the first application version in the first working mode. When the electronic device is switched from the first working mode to the second working mode, a service of the application of the first application version in the first working mode and a service of the application of the second application version in the second working mode can be switched to a same state, and user experience is improved.

The foregoing descriptions are merely example embodiments of the present invention, but are not intended to limit the present invention. Any modification, or improvement made within the principle of the present invention should fall within the protection scope of the present invention.

## Claims

1. A data synchronization method, applied to a first electronic device (100), wherein the first electronic device comprises a first processor (110) and a second processor (110); when the first electronic device works in a first working mode, the first processor runs a function based on a first application version; or when the first electronic device works in a second working mode, the second processor runs a function based on a second application version; and the method comprises:
when the first electronic device works in the first working mode, controlling (101), by the first processor, an application of the first application version based on obtained application control information, and synchronizing (101) the application control information to an application of the corresponding second application version; and
controlling (201), by the second processor, the application of the second application version based on the synchronized application control information.

2. The method according to claim 1, wherein
the application control information is application data information;
the application of the first application version is a target application of the first application version, and the application of the second application version is a target application of the second application version;
a process in which the first processor (110) controls the application of the first application version based on the obtained application control information comprises:
updating, by the first processor, the application data information to a package of the target application of the first application version;
a process in which the first processor synchronizes the application control information to the application of the corresponding second application version comprises:
transparently transmitting, by the first processor, the application data information to the second processor based on a package name of the target application through a cross-core communication module;
the controlling (201), by the second processor, the application of the second application version based on the synchronized application control information comprises:
synchronously updating, by the second processor (110), the application data information to a package of the target application of the second application version based on a package name of the target application; and
after the synchronously updating, by the second processor, the application data information to a package of the target application of the second application version based on a package name of the target application, the method further comprises:
executing, by the second processor, a corresponding service based on the synchronously updated application data information in the package of the target application of the second application version.

3. The method according to claim 2, wherein
the application data information is device subscription management information;
the target application is an application device subscription management service; and
the method further comprises:
when the first electronic device (100) works in the first working mode, sending, by the first processor, based on the updated device subscription management information in a package of the application device subscription management service of the first application version, device subscription information corresponding to the device subscription management information to a second electronic device connected to the first processor (110); or
when the first electronic device works in the second working mode, sending, by the second processor (110) based on the updated device subscription management information in a package of the application device subscription management service of the second application version, device subscription information corresponding to the device subscription management information to a second electronic device connected to the second processor.

4. The method according to claim 2, wherein
the application data information is in-application data;
the target application is a service application; and
the method further comprises:
when the first electronic device works in the first working mode, executing, by the first processor (110), a corresponding service based on the updated application data in a package of the service application of the first application version; or
when the first electronic device works in the second working mode, executing, by the second processor (110), a corresponding service based on the updated application data in a package of the service application of the second application version.

5. The method according to claim 1, wherein
the application control information is application installation state control information;
the application of the first application version is an application market of the first application version, and the application of the second application version is an application market of the second application version;
a process in which the first processor (110) controls the application of the first application version based on the obtained application control information comprises:
performing, by the first processor, corresponding application processing on the application market of the first application version based on the application installation state control information, wherein the application processing comprises at least one of installation, uninstallation, and updating; and
a process in which the second processor (110) controls the application of the second application version based on the synchronized application control information comprises:
performing, by the second processor, corresponding application processing on the application market of the second application version based on the synchronized application installation state control information.

6. The method according to claim 2, wherein the transparently transmitting, by the first processor (110), the application data information to the second processor (110) based on a package name of the target application through a cross-core communication module comprises:
sending, by the first processor, cross-core information and the application data information to the cross-core communication module, wherein the cross-core information comprises the package name of the target application;
finding, by the cross-core communication module, detection information based on the package name of the target application; and
transparently transmitting, by the cross-core communication module, the application data information to the second processor based on the detection information and the package name of the target application.

7. The method according to claim 1, wherein after the controlling (201), by the second processor (110), the application of the second application version based on the synchronized application control information, the method further comprises:
generating, by the second processor, a synchronization success message; and
sending, by the second processor, the synchronization success message to the first processor (110) through a cross-core communication module.

8. A first electronic device (100), wherein the first electronic device comprises a first processor (110), a second processor (110), and a cross-core communication module (3); the first processor and the second processor are connected through the cross-core communication module, the first processor comprises a part of the cross-core communication module, and the second processor comprises a part of the cross-core communication module; and when the first electronic device works in a first working mode, the first processor runs a function based on a first application version; or when the first electronic device works in a second working mode, the second processor runs a function based on a second application version;
when the first electronic device works in the first working mode, the first processor is configured to control an application of the first application version based on obtained application control information, and synchronize the application control information to an application of the corresponding second application version; and
the second processor is configured to control the application of the second application version based on the synchronized application control information.

9. The device (100) according to claim 8, wherein
the application control information is application data information;
the application of the first application version is a target application of the first application version, and the application of the second application version is a target application of the second application version;
the first processor (1) is specifically configured to: update the application data information to a package of the target application of the first application version; and transparently transmit the application data information to the second processor based on a package name of the target application through the cross-core communication module; and
the second processor (2) is specifically configured to: synchronously update the application data information to a package of the target application of the second application version based on a package name of the target application; and execute a corresponding service based on the synchronously updated application data information in the package of the target application of the second application version.

10. The device (100) according to claim 9, wherein
the application data information is device subscription management information;
the target application is an application device subscription management service; and
when the first electronic device works in the first working mode, the first processor (1) is configured to: send device subscription information corresponding to the device subscription management information to a second electronic device connected to the first processor, based on the updated device subscription management information in a package of the application device subscription management service of the first application version; or
when the first electronic device works in the second working mode, the second processor (2) is configured to: send device subscription information corresponding to the device subscription management information to a second electronic device connected to the second processor, based on the updated device subscription management information in a package of the application device subscription management service of the second application version.

11. The device (100) according to claim 9, wherein
the application data information is in-application data;
the target application is a service application; and
when the first electronic device works in the first working mode, the first processor (1) is configured to: execute a corresponding service based on the updated application data in a package of the service application of the first application version; or
when the first electronic device works in the second working mode, the second processor (2) is configured to: execute a corresponding service based on the updated application data in a package of the service application of the second application version.

12. The device (100) according to claim 8, wherein
the application control information is application installation state control information;
the application of the first application version is an application market of the first application version, and the application of the second application version is an application market of the second application version;
the first processor (1) is configured to: perform corresponding application processing on the application market of the first application version based on the application installation state control information, wherein the application processing comprises at least one of installation, uninstallation, and updating; and
the second processor (2) is configured to: perform corresponding application processing on the application market of the second application version based on the synchronized application installation state control information.

13. The device (100) according to claim 9, wherein
the first processor (1) is configured to: send cross-core information and the application data information to the cross-core communication module (3), wherein the cross-core information comprises the package name of the target application;
the cross-core communication module is configured to: find detection information based on the package name of the target application; and
the cross-core communication module is configured to: transparently transmit the application data information to the second processor (2) based on the detection information and the package name of the target application.

14. The device (100) according to claim 8, wherein
the second processor (2) is configured to: generate a synchronization success message; and
the second processor is configured to: send the synchronization success message to the first processor (1) through a cross-core communication module (3).

15. A storage medium, wherein the storage medium comprises a stored program; and when the program is run, a device (100) in which the storage medium is located is controlled to perform the data synchronization method according to any one of claims 1 to 7.

## Patentansprüche

1. Datensynchronisationsverfahren, angewendet auf eine erste elektronische Vorrichtung (100), wobei die erste elektronische Vorrichtung einen ersten Prozessor (110) und einen zweiten Prozessor (110) umfasst; wenn die erste elektronische Vorrichtung in einem ersten Arbeitsmodus arbeitet, der erste Prozessor eine Funktion basierend auf einer ersten Anwendungsversion vornimmt; oder wenn die erste elektronische Vorrichtung in einem zweiten Arbeitsmodus arbeitet, der zweite Prozessor eine Funktion basierend auf einer zweiten Anwendungsversion vornimmt; und das Verfahren umfasst:
wenn die erste elektronische Vorrichtung in dem ersten Arbeitsmodus arbeitet, Steuern (101), durch den ersten Prozessor, einer Anwendung der ersten Anwendungsversion basierend auf erhaltenen Anwendungssteuerinformationen, und Synchronisieren (101) der Anwendungssteuerinformationen mit einer Anwendung der entsprechenden zweiten Anwendungsversion; und
Steuern (201), durch den zweiten Prozessor, der Anwendung der zweiten Anwendungsversion basierend auf den synchronisierten Anwendungssteuerinformationen.

2. Verfahren nach Anspruch 1, wobei
die Anwendungssteuerinformationen Anwendungsdateninformationen sind;
die Anwendung der ersten Anwendungsversion eine Zielanwendung der ersten Anwendungsversion ist, und die Anwendung der zweiten Anwendungsversion eine Zielanwendung der zweiten Anwendungsversion ist;
ein Prozess, in dem der erste Prozessor (110) die Anwendung der ersten Anwendungsversion basierend auf den erhaltenen Anwendungssteuerinformationen steuert, umfasst:
Aktualisieren, durch den ersten Prozessor, der Anwendungsdateninformationen auf ein Paket der Zielanwendung der ersten Anwendungsversion;
ein Prozess, in dem der erste Prozessor die Anwendungssteuerinformationen mit der Anwendung der entsprechenden zweiten Anwendungsversion synchronisiert, umfasst:
transparentes Übertragen, durch den ersten Prozessor, der Anwendungsdateninformationen an den zweiten Prozessor basierend auf einem Paketnamen der Zielanwendung über ein kernübergreifendes Kommunikationsmodul; das Steuern (201), durch den zweiten Prozessor, der Anwendung der zweiten Anwendungsversion basierend auf den synchronisierten
Anwendungssteuerinformationen umfasst:
synchrones Aktualisieren, durch den zweiten Prozessor (110), der Anwendungsdateninformationen auf ein Paket der Zielanwendung der zweiten Anwendungsversion basierend auf einem Paketnamen der Zielanwendung; und
nach dem synchronen Aktualisieren, durch den zweiten Prozessor, der Anwendungsdateninformationen auf ein Paket der Zielanwendung der zweiten Anwendungsversion basierend auf einem Paketnamen der Zielanwendung, das Verfahren ferner umfasst:
Ausführen, durch den zweiten Prozessor, eines entsprechenden Dienstes basierend auf den synchron aktualisierten Anwendungsdateninformationen in dem Paket der Zielanwendung der zweiten Anwendungsversion.

3. Verfahren nach Anspruch 2, wobei
die Anwendungsdateninformationen Vorrichtungsabonnementverwaltungsinformationen sind;
die Zielanwendung ein Anwendungsvorrichtungsabonnementverwaltungsdienst ist; und wobei das Verfahren ferner umfasst:
wenn die erste elektronische Vorrichtung (100) in dem ersten Arbeitsmodus arbeitet, Senden, durch den ersten Prozessor, basierend auf den aktualisierten Vorrichtungsabonnementverwaltungsinformationen in einem Paket des Anwendungsvorrichtungsabonnementverwaltungsdienstes der ersten Anwendungsversion, von Vorrichtungsabonnementinformationen, die den Vorrichtungsabonnementverwaltungsinformationen entsprechen, an eine zweite elektronische Vorrichtung, die mit dem ersten Prozessor (110) verbunden ist; oder
wenn die erste elektronische Vorrichtung in dem zweiten Arbeitsmodus arbeitet, Senden, durch den zweiten Prozessor (110) basierend auf den aktualisierten Vorrichtungsabonnementverwaltungsinformationen in einem Paket des Anwendungsvorrichtungsabonnementverwaltungsdienstes der zweiten Anwendungsversion, von Vorrichtungsabonnementinformationen, die den Vorrichtungsabonnementverwaltungsinformationen entsprechen, an eine zweite elektronische Vorrichtung, die mit dem zweiten Prozessor verbunden ist.

4. Verfahren nach Anspruch 2, wobei
die Anwendungsdateninformationen anwendungsinterne Daten sind;
die Zielanwendung eine Dienstanwendung ist; und
wobei das Verfahren ferner umfasst:
wenn die erste elektronische Vorrichtung in dem ersten Arbeitsmodus arbeitet, Ausführen, durch den ersten Prozessor (110), eines entsprechenden Dienstes basierend auf den aktualisierten Anwendungsdaten in einem Paket der Dienstanwendung der ersten Anwendungsversion; oder
wenn die erste elektronische Vorrichtung in dem zweiten Arbeitsmodus arbeitet, Ausführen, durch den zweiten Prozessor (110), eines entsprechenden Dienstes basierend auf den aktualisierten Anwendungsdaten in einem Paket der Dienstanwendung der zweiten Anwendungsversion.

5. Verfahren nach Anspruch 1, wobei
die Anwendungssteuerinformationen Anwendungsinstallationszustandssteuerinformationen sind;
die Anwendung der ersten Anwendungsversion ein Anwendungsmarkt der ersten Anwendungsversion ist, und die Anwendung der zweiten Anwendungsversion ein Anwendungsmarkt der zweiten Anwendungsversion ist;
ein Prozess, in dem der erste Prozessor (110) die Anwendung der ersten Anwendungsversion basierend auf den erhaltenen Anwendungssteuerinformationen steuert, umfasst:
Durchführen, durch den ersten Prozessor, einer entsprechenden Anwendungsverarbeitung auf dem Anwendungsmarkt der ersten Anwendungsversion basierend auf den Anwendungsinstallationszustandssteuerinformationen, wobei die Anwendungsverarbeitung mindestens eines von Installation, Deinstallation und Aktualisierung umfasst; und
ein Prozess, in dem der zweite Prozessor (110) die Anwendung der zweiten Anwendungsversion basierend auf den synchronisierten Anwendungssteuerungsinformationen steuert, umfasst:
Ausführen, durch den zweiten Prozessor, einer entsprechenden Anwendungsverarbeitung auf dem Anwendungsmarkt der zweiten Anwendungsversion basierend auf den synchronisierten Anwendungsinstallationszustandssteuerinformationen.

6. Verfahren nach Anspruch 2, wobei das transparente Übertragen, durch den ersten Prozessor (110), der Anwendungsdateninformationen an den zweiten Prozessor (110) basierend auf einem Paketnamen der Zielanwendung über ein kernübergreifendes Kommunikationsmodul umfasst:
Senden, durch den ersten Prozessor, von kernübergreifenden Informationen und den Anwendungsdateninformationen an das kernübergreifende Kommunikationsmodul, wobei die kernübergreifenden Informationen den Paketnamen der Zielanwendung umfassen;
Finden, durch das kernübergreifende Kommunikationsmodul, von Erkennungsinformationen basierend auf dem Paketnamen der Zielanwendung; und
transparentes Übertragen, durch das kernübergreifende Kommunikationsmodul, der Anwendungsdateninformationen an den zweiten Prozessor basierend auf den Erkennungsinformationen und dem Paketnamen der Zielanwendung.

7. Verfahren nach Anspruch 1, wobei nach dem Steuern (201), durch den zweiten Prozessor (110), der Anwendung der zweiten Anwendungsversion basierend auf den synchronisierten Anwendungssteuerinformationen, das Verfahren ferner umfasst:
Erzeugen, durch den zweiten Prozessor, einer Synchronisationserfolgsnachricht; und
Senden, durch den zweiten Prozessor, der Synchronisationserfolgsnachricht an den ersten Prozessor (110) über ein kernübergreifendes Kommunikationsmodul.

8. Erste elektronische Vorrichtung (100), wobei die erste elektronische Vorrichtung einen ersten Prozessor (110), einen zweiten Prozessor (110) und ein kernübergreifendes Kommunikationsmodul (3) umfasst; der erste Prozessor und der zweite Prozessor über das kernübergreifende Kommunikationsmodul verbunden sind, der erste Prozessor einen Teil des kernübergreifenden Kommunikationsmoduls umfasst, und der zweite Prozessor einen Teil des kernübergreifenden Kommunikationsmoduls umfasst; und wenn die erste elektronische Vorrichtung in einem ersten Arbeitsmodus arbeitet, der erste Prozessor eine Funktion basierend auf einer ersten Anwendungsversion vornimmt; oder wenn die erste elektronische Vorrichtung in einem zweiten Arbeitsmodus arbeitet, der zweite Prozessor eine Funktion basierend auf einer zweiten Anwendungsversion vornimmt;
wenn die erste elektronische Vorrichtung in dem ersten Arbeitsmodus arbeitet, der erste Prozessor konfiguriert ist, um eine Anwendung der ersten Anwendungsversion basierend auf erhaltenen Anwendungssteuerinformationen zu steuern und die Anwendungssteuerinformationen mit einer Anwendung der entsprechenden zweiten Anwendungsversion zu synchronisieren; und
der zweite Prozessor konfiguriert ist, um die Anwendung der zweiten Anwendungsversion basierend auf den synchronisierten Anwendungssteuerinformationen zu steuern.

9. Vorrichtung (100) nach Anspruch 8, wobei
die Anwendungssteuerinformationen Anwendungsdateninformationen sind;
die Anwendung der ersten Anwendungsversion eine Zielanwendung der ersten Anwendungsversion ist, und die Anwendung der zweiten Anwendungsversion eine Zielanwendung der zweiten Anwendungsversion ist;
der erste Prozessor (1) speziell konfiguriert ist zum: Aktualisieren der Anwendungsdateninformationen auf ein Paket der Zielanwendung der ersten Anwendungsversion; transparenten Übertragen der Anwendungsdateninformationen an den zweiten Prozessor basierend auf einem Paketnamen der Zielanwendung durch das kernübergreifende Kommunikationsmodul; und
der zweite Prozessor (2) speziell konfiguriert ist zum: synchronen Aktualisieren der Anwendungsdateninformationen basierend auf einem Paketnamen der Zielanwendung auf ein Paket der Zielanwendung der zweiten Anwendungsversion; und Ausführen eines entsprechenden Dienstes basierend auf der synchron aktualisierten Anwendungsdateninformation in dem Paket der Zielanwendung der zweiten Anwendungsversion.

10. Vorrichtung (100) nach Anspruch 9, wobei
die Anwendungsdateninformationen Vorrichtungsabonnementverwaltungsinformationen sind;
die Zielanwendung ein Anwendungsvorrichtungsabonnementverwaltungsdienst ist; und wenn die erste elektronische Vorrichtung in dem ersten Arbeitsmodus arbeitet, der erste Prozessor (1) konfiguriert ist zum: Senden von Vorrichtungsabonnementinformationen, die den Vorrichtungsabonnementverwaltungsinformationen entsprechen, an eine zweite elektronische Vorrichtung, die mit dem ersten Prozessor verbunden ist, basierend auf den aktualisierten Vorrichtungsabonnementverwaltungsinformationen in einem Paket des Anwendungsvorrichtungsabonnementverwaltungsdienstes der ersten Anwendungsversion; oder
wenn die erste elektronische Vorrichtung in dem zweiten Arbeitsmodus arbeitet, der zweite Prozessor (2) konfiguriert ist zum: Senden von Vorrichtungsabonnementinformationen, die den Vorrichtungsabonnementverwaltungsinformationen entsprechen, an eine zweite elektronische Vorrichtung, die mit dem zweiten Prozessor verbunden ist, basierend auf den aktualisierten Vorrichtungsabonnementverwaltungsinformationen in einem Paket des Anwendungsvorrichtungsabonnementverwaltungsdienstes der zweiten Anwendungsversion.

11. Vorrichtung (100) nach Anspruch 9, wobei
die Anwendungsdateninformationen anwendungsinterne Daten sind;
die Zielanwendung eine Dienstanwendung ist; und
wenn die erste elektronische Vorrichtung in dem ersten Arbeitsmodus arbeitet, der erste Prozessor (1) konfiguriert ist zum: Ausführen eines entsprechenden Dienstes basierend auf den aktualisierten Anwendungsdaten in einem Paket der Dienstanwendung der ersten Anwendungsversion; oder
wenn die erste elektronische Vorrichtung in dem zweiten Arbeitsmodus arbeitet, der zweite Prozessor (2) konfiguriert ist zum: Ausführen eines entsprechenden Dienstes basierend auf den aktualisierten Anwendungsdaten in einem Paket der Dienstanwendung der zweiten Anwendungsversion.

12. Vorrichtung (100) nach Anspruch 8, wobei
die Anwendungssteuerinformationen Anwendungsinstallationszustandssteuerinformationen sind;
die Anwendung der ersten Anwendungsversion ein Anwendungsmarkt der ersten Anwendungsversion ist, und die Anwendung der zweiten Anwendungsversion ein Anwendungsmarkt der zweiten Anwendungsversion ist;
der erste Prozessor (1) konfiguriert ist zum: Durchführen einer entsprechenden Anwendungsverarbeitung auf dem Anwendungsmarkt der ersten Anwendungsversion basierend auf den Anwendungsinstallationszustandssteuerinformationen, wobei die Anwendungsverarbeitung mindestens eines von Installation, Deinstallation und Aktualisierung umfasst; und
der zweite Prozessor (2) konfiguriert ist zum: Durchführen entsprechender Anwendungsverarbeitung auf den Anwendungsmarkt der zweiten Anwendungsversion basierend auf den synchronisierten Anwendungsinstallationszustandssteuerinformationen.

13. Vorrichtung (100) nach Anspruch 9, wobei
der erste Prozessor (1) konfiguriert ist zum: Senden kernübergreifender Informationen und der Anwendungsdateninformationen an das kernübergreifende Kommunikationsmodul (3), wobei die kernübergreifenden Informationen den Paketnamen der Zielanwendung umfassen;
das kernübergreifende Kommunikationsmodul konfiguriert ist zum: Finden von Erkennungsinformationen basierend auf dem Paketnamen der Zielanwendung; und das kernübergreifende Kommunikationsmodul konfiguriert ist zum: transparenten Übertragen der Anwendungsdateninformationen an den zweiten Prozessor (2) basierend auf den Erkennungsinformationen und dem Paketnamen der Zielanwendung.

14. Vorrichtung (100) nach Anspruch 8, wobei
der zweite Prozessor (2) konfiguriert ist zum: Erzeugen einer Synchronisationserfolgsnachricht; und
der zweite Prozessor konfiguriert ist zum: Senden der Synchronisationserfolgsnachricht an den ersten Prozessor (1) über ein kernübergreifendes Kommunikationsmodul (3).

15. Speicherungsmedium, wobei das Speicherungsmedium ein gespeichertes Programm umfasst; und, wenn das Programm vorgenommen wird, eine Vorrichtung (100), in der sich das Speicherungsmedium befindet, gesteuert wird, um das Datensynchronisationsverfahren nach einem der Ansprüche 1 bis 7 durchzuführen.

## Revendications

1. Procédé de synchronisation de données, appliqué à un premier dispositif électronique (100), dans lequel le premier dispositif électronique comprend un premier processeur (110) et un second processeur (110) ; lorsque le premier dispositif électronique fonctionne dans un premier mode de fonctionnement, le premier processeur exécute une fonction sur la base d'une première version d'application ; ou, lorsque le premier dispositif électronique fonctionne dans un second mode de fonctionnement, le second processeur exécute une fonction sur la base d'une seconde version d'application ; et le procédé comprend :
lorsque le premier dispositif électronique fonctionne dans le premier mode de fonctionnement, la commande (101), par le premier processeur, d'une application de la première version d'application sur la base d'informations de commande d'application obtenues, et la synchronisation (101) des informations de commande d'application avec une application de la seconde version d'application correspondante ; et
la commande (201), par le second processeur, de l'application de la seconde version d'application sur la base des informations de commande d'application synchronisées.

2. Procédé selon la revendication 1, dans lequel
les informations de commande d'application sont des informations de données d'application ;
l'application de la première version d'application est une application cible de la première version d'application, et l'application de la seconde version d'application est une application cible de la seconde version d'application ;
un processus lors duquel le premier processeur (110) commande l'application de la première version d'application sur la base des informations de commande d'application obtenues comprend :
la mise à jour, par le premier processeur, des informations de données d'application vers un paquet de l'application cible de la première version d'application ;
un processus lors duquel le premier processeur synchronise les informations de commande d'application avec l'application de la seconde version d'application correspondante comprend :
la transmission de manière transparente, par le premier processeur, des informations de données d'application au second processeur sur la base d'un nom de paquet de l'application cible par l'intermédiaire d'un module de communication intercœur ;
la commande (201), par le second processeur, de l'application de la seconde version d'application sur la base des informations de commande d'application synchronisées comprend :
la mise à jour de manière synchrone, par le second processeur (110), des informations de données d'application vers un paquet de l'application cible de la seconde version d'application sur la base d'un nom de paquet de l'application cible ; et
après la mise à jour de manière synchrone, par le second processeur, des informations de données d'application vers un paquet de l'application cible de la seconde version d'application sur la base d'un nom de paquet de l'application cible, le procédé comprend en outre :
l'exécution, par le second processeur, d'un service correspondant sur la base des informations de données d'application mises à jour de manière synchrone dans le paquet de l'application cible de la seconde version d'application.

3. Procédé selon la revendication 2, dans lequel
les informations de données d'application sont des informations de gestion d'abonnement de dispositif ;
l'application cible est un service de gestion d'abonnement de dispositif d'application ; et
le procédé comprend en outre :
lorsque le premier dispositif électronique (100) fonctionne dans le premier mode de fonctionnement, l'envoi, par le premier processeur, sur la base des informations de gestion d'abonnement de dispositif mises à jour dans un paquet du service de gestion d'abonnement de dispositif d'application de la première version d'application, d'informations d'abonnement de dispositif correspondant aux informations de gestion d'abonnement de dispositif à un second dispositif électronique connecté au premier processeur (110) ; ou
lorsque le premier dispositif électronique fonctionne dans le second mode de fonctionnement, l'envoi, par le second processeur (110), sur la base des informations de gestion d'abonnement de dispositif mises à jour dans un paquet du service de gestion d'abonnement de dispositif d'application de la seconde version d'application, d'informations d'abonnement de dispositif correspondant aux informations de gestion d'abonnement de dispositif à un second dispositif électronique connecté au second processeur.

4. Procédé selon la revendication 2, dans lequel
les informations de données d'application sont des données intégrées à l'application ; l'application cible est une application de service ; et
le procédé comprend en outre :
lorsque le premier dispositif électronique fonctionne dans le premier mode de fonctionnement, l'exécution, par le premier processeur (110), d'un service correspondant sur la base des données d'application mises à jour dans un paquet de l'application de service de la première version d'application ; ou
lorsque le premier dispositif électronique fonctionne dans le second mode de fonctionnement, l'exécution, par le second processeur (110), d'un service correspondant sur la base des données d'application mises à jour dans un paquet de l'application de service de la seconde version d'application.

5. Procédé selon la revendication 1, dans lequel
les informations de commande d'application sont des informations de commande d'état d'installation d'application ;
l'application de la première version d'application est un magasin d'applications de la première version d'application, et l'application de la seconde version d'application est un magasin d'applications de la seconde version d'application ;
un processus lors duquel le premier processeur (110) commande l'application de la première version d'application sur la base des informations de commande d'application obtenues comprend :
la réalisation, par le premier processeur, d'un traitement d'application correspondant sur le magasin d'applications de la première version d'application sur la base des informations de commande d'état d'installation d'application, dans lequel le traitement d'application comprend au moins l'une parmi une installation, une désinstallation et une mise à jour ; et
un processus lors duquel le second processeur (110) commande l'application de la seconde version d'application sur la base des informations de commande d'application synchronisées comprend :
la réalisation, par le second processeur, d'un traitement d'application correspondant sur le magasin d'applications de la seconde version d'application sur la base des informations de commande d'état d'installation d'application synchronisées.

6. Procédé selon la revendication 2, dans lequel la transmission de manière transparente, par le premier processeur (110), des informations de données d'application au second processeur (110) sur la base d'un nom de paquet de l'application cible par l'intermédiaire d'un module de communication intercœur comprend :
l'envoi, par le premier processeur, d'informations intercœurs et des informations de données d'application au module de communication intercœur, dans lequel les informations intercœurs comprennent le nom de paquet de l'application cible ;
la découverte, par le module de communication intercœur, d'informations de détection sur la base du nom de paquet de l'application cible ; et
la transmission de manière transparente, par le module de communication intercœur, des informations de données d'application au second processeur sur la base des informations de détection et du nom de paquet de l'application cible.

7. Procédé selon la revendication 1, dans lequel, après la commande (201), par le second processeur (110), de l'application de la seconde version d'application sur la base des informations de commande d'application synchronisées, le procédé comprend en outre :
la génération, par le second processeur, d'un message de réussite de synchronisation ; et
l'envoi, par le second processeur, du message de réussite de synchronisation au premier processeur (110) par l'intermédiaire d'un module de communication intercœur.

8. Premier dispositif électronique (100), dans lequel le premier dispositif électronique comprend un premier processeur (110), un second processeur (110) et un module de communication intercœur (3) ; le premier processeur et le second processeur sont connectés par l'intermédiaire du module de communication intercœur, le premier processeur comprend une partie du module de communication intercœur, et le second processeur comprend une partie du module de communication intercœur ; et, lorsque le premier dispositif électronique fonctionne dans un premier mode de fonctionnement, le premier processeur exécute une fonction sur la base d'une première version d'application ; ou, lorsque le premier dispositif électronique fonctionne dans un second mode de fonctionnement, le second processeur exécute une fonction sur la base d'une seconde version d'application ;
lorsque le premier dispositif électronique fonctionne dans le premier mode de fonctionnement, le premier processeur est configuré pour commander une application de la première version d'application sur la base d'informations de commande d'application obtenues, et synchroniser les informations de commande d'application avec une application de la seconde version d'application correspondante ; et
le second processeur est configuré pour commander l'application de la seconde version d'application sur la base des informations de commande d'application synchronisées.

9. Dispositif (100) selon la revendication 8, dans lequel
les informations de commande d'application sont des informations de données d'application ;
l'application de la première version d'application est une application cible de la première version d'application, et l'application de la seconde version d'application est une application cible de la seconde version d'application ;
le premier processeur (1) est spécifiquement configuré pour : mettre à jour les informations de données d'application vers un paquet de l'application cible de la première version d'application ; et transmettre de manière transparente les informations de données d'application au second processeur sur la base d'un nom de paquet de l'application cible par l'intermédiaire du module de communication intercœur ; et
le second processeur (2) est spécifiquement configuré pour : mettre à jour de manière synchrone les informations de données d'application vers un paquet de l'application cible de la seconde version d'application sur la base d'un nom de paquet de l'application cible ; et exécuter un service correspondant sur la base des informations de données d'application mises à jour de manière synchrone dans le paquet de l'application cible de la seconde version d'application.

10. Dispositif (100) selon la revendication 9, dans lequel
les informations de données d'application sont des informations de gestion d'abonnement de dispositif ;
l'application cible est un service de gestion d'abonnement de dispositif d'application ; et
lorsque le premier dispositif électronique fonctionne dans le premier mode de fonctionnement, le premier processeur (1) est configuré pour : envoyer des informations d'abonnement de dispositif correspondant aux informations de gestion d'abonnement de dispositif à un second dispositif électronique connecté au premier processeur, sur la base des informations de gestion d'abonnement de dispositif mises à jour dans un paquet du service de gestion d'abonnement de dispositif d'application de la première version d'application ; ou
lorsque le premier dispositif électronique fonctionne dans le second mode de fonctionnement, le second processeur (2) est configuré pour : envoyer des informations d'abonnement de dispositif correspondant aux informations de gestion d'abonnement de dispositif à un second dispositif électronique connecté au second processeur, sur la base des informations de gestion d'abonnement de dispositif mises à jour dans un paquet du service de gestion d'abonnement de dispositif d'application de la seconde version d'application.

11. Dispositif (100) selon la revendication 9, dans lequel
les informations de données d'application sont des données intégrées à l'application ; l'application cible est une application de service ; et
lorsque le premier dispositif électronique fonctionne dans le premier mode de fonctionnement, le premier processeur (1) est configuré pour : exécuter un service correspondant sur la base des données d'application mises à jour dans un paquet de l'application de service de la première version d'application ; ou
lorsque le premier dispositif électronique fonctionne dans le second mode de fonctionnement, le second processeur (2) est configuré pour : exécuter un service correspondant sur la base des données d'application mises à jour dans un paquet de l'application de service de la seconde version d'application.

12. Dispositif (100) selon la revendication 8, dans lequel
les informations de commande d'application sont des informations de commande d'état d'installation d'application ;
l'application de la première version d'application est un magasin d'applications de la première version d'application, et l'application de la seconde version d'application est un magasin d'applications de la seconde version d'application ;
le premier processeur (1) est configuré pour : réaliser un traitement d'application correspondant sur le magasin d'applications de la première version d'application sur la base des informations de commande d'état d'installation d'application, dans lequel le traitement d'application comprend au moins l'une parmi une installation, une désinstallation et une mise à jour ; et
le second processeur (2) est configuré pour : réaliser un traitement d'application correspondant sur le magasin d'applications de la seconde version d'application sur la base des informations de commande d'état d'installation d'application synchronisées.

13. Dispositif (100) selon la revendication 9, dans lequel
le premier processeur (1) est configuré pour : envoyer des informations intercœurs et les informations de données d'application au module de communication intercœur (3), dans lequel les informations intercœurs comprennent le nom de paquet de l'application cible ;
le module de communication intercœur est configuré pour : découvrir des informations de détection sur la base du nom de paquet de l'application cible ; et
le module de communication intercœur est configuré pour : transmettre de manière transparente les informations de données d'application au second processeur (2) sur la base des informations de détection et du nom de paquet de l'application cible.

14. Dispositif (100) selon la revendication 8, dans lequel
le second processeur (2) est configuré pour : générer un message de réussite de synchronisation ; et
le second processeur est configuré pour : envoyer le message de réussite de synchronisation au premier processeur (1) par l'intermédiaire d'un module de communication intercœur (3).

15. Support de stockage, dans lequel le support de stockage comprend un programme stocké ; et lorsque le programme est exécuté, un dispositif (100) dans lequel se trouve le support de stockage est commandé pour réaliser le procédé de synchronisation de données selon l'une quelconque des revendications 1 à 7.
